# EUROPÄISCHE PATENTSCHRIFT

(11) **EP 1 627 167 B1**
(45) Veröffentlichungstag und Bekanntmachung des Hinweises auf die Patenterteilung: **02.01.2008**
(21) Anmeldenummer: 04728565.5
(22) Anmeldetag: 21.04.2004
(51) Int. Cl.: F16K 1/226

(54) **DROSSELKLAPPENVENTIL**
BUTTERFLY VALVE
SOUPAPE A PAPILLON

(30) Priorität: 16.05.2003 DE 10322280
(43) Veröffentlichungstag der Anmeldung: 22.02.2006
(73) Patentinhaber: Alfa Laval LKM A/S, 6000 Kolding (DK)
(72) Erfinder: LASSE, Korf, Madsen, DK-5260 Odense S (DK)
(74) Vertreter: Kloiber, Thomas
(86) Internationale Anmeldenummer: PCT/EP2004/004200
(87) Internationale Veröffentlichungsnummer: WO 2004/102047

(56) Entgegenhaltungen:
- EP-A- 0 683 340
- DE-A- 2 536 995
- DE-B- 1 550 499
- FR-A- 1 181 609
- US-A- 3 129 920
- US-A- 4 653 725

## Beschreibung

Die Erfindung betrifft ein Drosselklappenventil mit einem im wesentlichen ringförmigen, elastischen Dichtelement, das eine axiale Öffnung umschließt, mit einer in der axialen Öffnung quer zur Axialrichtung drehbar angeordneten Ventilscheibe, mit Mitteln zur Drehung der Ventilscheibe zwischen geöffneten und geschlossenen Stellungen zur Steuerung eines Fluidstromes durch die Öffnung, mit mindestens zwei das Dichtelement im wesentlichen ringförmig umschließenden Ventilgehäuseteilen, die zwei mit einem Zufluß und einem Abfluß verbundene Flansche umgreifen, wobei konische Anlageflächen der Flansche und/oder der Ventilgehäuseteile derart zusammenwirken, daß die Flansche durch die Ventilgehäuseteile im betriebsfertig montierten Zustand axial an das Dichtelement dichtend angepreßt sind, wobei die Flansche mit den Ventilgehäuseteilen jeweils formschlüssig starr verbunden sind.

Ein solches Drosselklappenventil ist zum Beispiel aus der US 4,653,725 und DE 15 50 499 B2 bekannt. Bei dem dort vorgeschlagenen Ventil werden zwei mit einem Zufluß und einem Abfluß verbundene Flansche durch zwei Backen zusammengehalten. Zwischen den Flanschen ist eine im wesentlichen ringförmige Gummidichtung eingeklemmt, welche eine Ventilscheibe ummantelt. Durch abgeschrägte Innenflächen der Backen wirkt beim radialen Zusammendrücken der beiden Backen zusätzlich zu der radialen Kraft auch eine axiale Kraft auf die Flansche, die die Flansche aufeinanderzubewegt. Im betriebsfertig montierten Zustand stehen die die Gummidichtung einklemmenden Flanschendflächen nicht in berührender Verbindung mit den Backen. Eine Verbindung der Flansche zu den Backen besteht lediglich mittelbar über das Dichtelement sowie auf der der Gummidichtung abgewandten Rückfläche. Die Verbindung ist daher in axialer Richtung entlang des Ventils elastisch.

Nachteilig bei derartigen Drosselklappenventilen ist, daß bei Einwirken von axialen Kräften auf das Ventil, zum Beispiel durch Vibrationen in vor- und/oder nachgeschalteten Anlagenteilen, über die Flansche die die Gummidichtung zusammenhaltende Kraft variiert. Die Übertragung der zum Beispiel durch Vibrationen auftretenden variablen axialen Kräfte auf die Gummidichtung können nachteilig eine ungleichmäßige Abnutzung der Gummidichtung zur Folge haben. Dies kann wiederum den Nachteil des Undichtwerdens der Dichtung zur Folge haben.

Ein weiterer Nachteil des bekannten Drosselklappenventils ist der verhältnismäßig große Materialeinsatz durch die Verwendung von im wesentlichen massiven Backen zur Montage des Ventils. Ein hoher Materialeinsatz ist sowohl aus Gewichts- als auch aus Kostengründen unerwünscht.

Aufgabe der Erfindung ist es daher, ein Drosselklappenventil der eingangs genannten Art vorzuschlagen, bei dem die auf das Dichtelement einwirkenden axialen Kräfte im wesentlichen unabhängig vom Betriebszustand der Anlage sind, und welches besonders materialsparend konstruiert ist.

Die Erfindung löst diese Aufgabe auf überraschend einfache Weise dadurch, daß die Flansche rotationssymmetrisch geformt sind. Der Vorteil dieser Ausgestaltung ist, daß ein Handrad oder ein automatischer Ventilantrieb in beliebiger Winkelorientierung an dem Ventil montiert werden kann. Dies ist zum Beispiel vorteilhaft, wenn das Ventil in Rohrleitungen, die sich in der Nähe von anderen Anlagenelementen befinden, montiert wird und/oder wenn der Zugang zu dem Handrad oder zu dem automatischen Ventilantrieb nur bei bestimmten Ausrichtungen des Handrads oder des Antriebs möglich ist, da mit der erfindungsgemäßen Rotationssymmetrie der Flansche eine beliebige Ausrichtung einstellbar ist. Durch die starre Verbindung der Flansche mit den umschließenden Ventilgehäuseteilen wird vorteilhaft erreicht, daß die Gummidichtung im betriebsfertig montierten Zustand von einer konstanten, ausschließlich durch die Konstruktion der Ventilgehäuseteile und der Gummidichtung bestimmten Kraft zusammengepreßt ist. Axiale Kräfte aus den vor- oder nachgeschalteten Anlagenteilen werden von der jeweiligen Flanschendfläche über die starre Verbindung mit den Ventilgehäuseteilen auf die Ventilgehäuseteile und von diesen auf den gegenüberliegenden Flansch übertragen mit dem Vorteil, daß die Kraft auf die Gummidichtung davon unbeeinflußt ist.

In einer besonders vorteilhaften Ausgestaltung der Erfindung sind die Ventilgehäuseteile als zwei Klemmenhälften ausgebildet. Dies hat den Vorteil, daß lediglich zwei Einzelteile für die Montage des Ventils benötigt werden. Außerdem hat die Verwendung zweier Klemmenhälften den Vorteil, auf überraschend materialsparende Weise eine Montage des Ventils zu ermöglichen. Besonders vorteilhaft ist aber, daß mit Hilfe der Klemmenhälften das Ventil beispielsweise zum Austausch der Dichtung *in situ* zerlegbar ist, da zum Entfernen der Dichtung kein Auseinanderziehen der Flansche erforderlich ist.

Eine spezielle Ausgestaltung der Erfindung sieht vor, daß die mit dem Dichtelement in Anlage stehenden Innenflächen der Klemmenhälften zwei ringförmige, die Flansche umschließende Vertiefungen aufweisen. Der Vorteil dieser Ausführung ist, daß auf diese Weise über die Klemmenhälften die radiale Haltekraft auch in eine axiale Haltekraftkomponente zerlegt wird zum axialen Einklemmen der Dichtung zwischen den Flanschen.

Besonders günstig ist es, wenn die Vertiefungen in Innenflächen der Klemmenhälften an den Rändern abgeschrägt sind, da auf diese Weise eine besonders einfache Montage möglich ist, indem durch Zusammenziehen der Klemmenhälften in radialer Richtung die beiden mit einem Zufluß und einem Abfluß verbundenen Flansche entsprechend der Ausgestaltung der Abschrägung axial zusammengezogen werden. Auf diese Weise werden vorteilhaft gleichzeitig der für die Abdichtung entscheidende radiale Anpreßdruck und der über die Flanschendflächen ausgeübte axiale Anpreßdruck auf die Dichtung schrittweise erhöht bis die Flanschendflächen die Klemme berühren.

Eine weitere vorteilhafte Ausgestaltung der Erfindung ergibt sich, wenn die Flansche nach außen konisch verjüngt ausgebildet sind, da auf diese Weise vorteilhaft eine besonders einfache Montage möglich ist, indem durch Zusammenziehen der Klemmenhälften in radialer Richtung die beiden Flansche entsprechend der speziellen Ausgestaltung der konischen Verjüngung axial zusammengezogen werden. Auf diese Weise werden vorteilhaft gleichzeitig der für die Abdichtung entscheidende radiale Anpreßdruck und der über die Flanschendflächen ausgeübte axiale Anpreßdruck auf die Dichtung schrittweise erhöht.

In einer anderen speziellen Ausgestaltung der Erfindung sind die Ventilgehäuseteile mit Schrauben und Muttern verbindbar ausgebildet. Dies hat den Vorteil, daß eine *in situ* Montage des Ventils auf besonders einfache Weise ohne Spezialwerkzeug auch durch unqualifiziertes Personal möglich ist. Insbesondere ist auf diese Weise vorteilhaft ein *in situ* Austausch der Dichtung möglich.

Eine sehr günstige Ausführungsform der Erfindung erhält man, die Ventilgehäuseteile mit zwei radial gegenüberliegenden ringförmigen Aufnahmen zur Aufnahme von Ventilscheibenschäften der Ventilscheibe ausgebildet sind. Dadurch ist vorteilhaft die Lagerung von Ventilscheibenschäften in den Ventilgehäuseteilen möglich. Der Vorteil dieser Ausführungsform besteht darin, daß die Anzahl der Bauteile des Ventils klein ist, da die Ventilgehäuseteile zugleich zur Halterung der Dichtung, zur Montage des Ventils und anhand der zwei radial gegenüberliegenden ringförmigen Aufnahmen auch zur Lagerung und Halterung der Achse der Ventilscheibe verwendet werden. Auf diese Weise werden vorteilhaft Material und Kosten eingespart.

In einer speziellen Variante der Erfindung ist das Mittel zur Drehung der Ventilscheibe ein automatisches Stellglied.

In einer anderen Variante der Erfindung ist das Mittel zur Drehung der Ventilscheibe ein Handrad.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: Gesamtansicht eines montierten erfindungsgemäßen Ventils

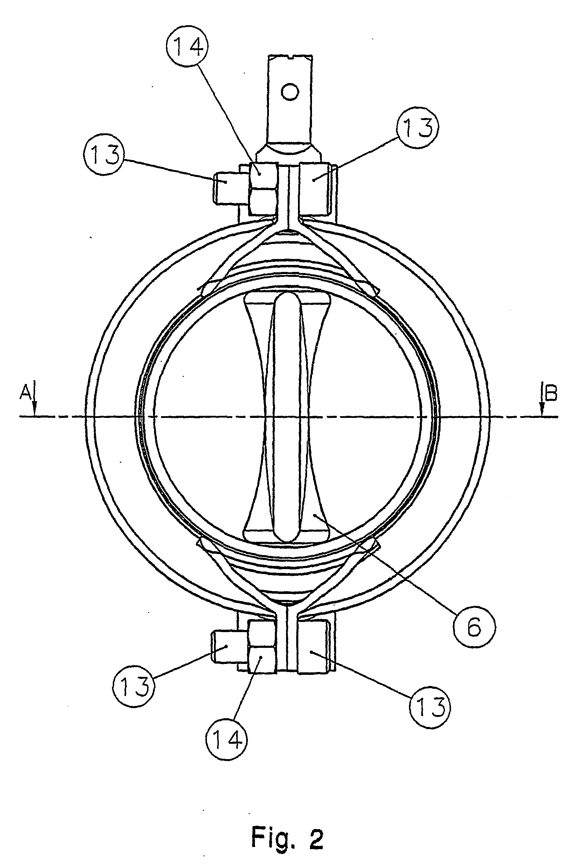

- Fig. 2:: Frontansicht in axialer Richtung eines erfindungsgemäßes Ventils
- Fig. 3:: Axialer Längsschnitt entlang der Linie A - B aus Fig. 2
- Fig. 4:: Seitenansicht eines montierten erfindungsgemäßen Ventils

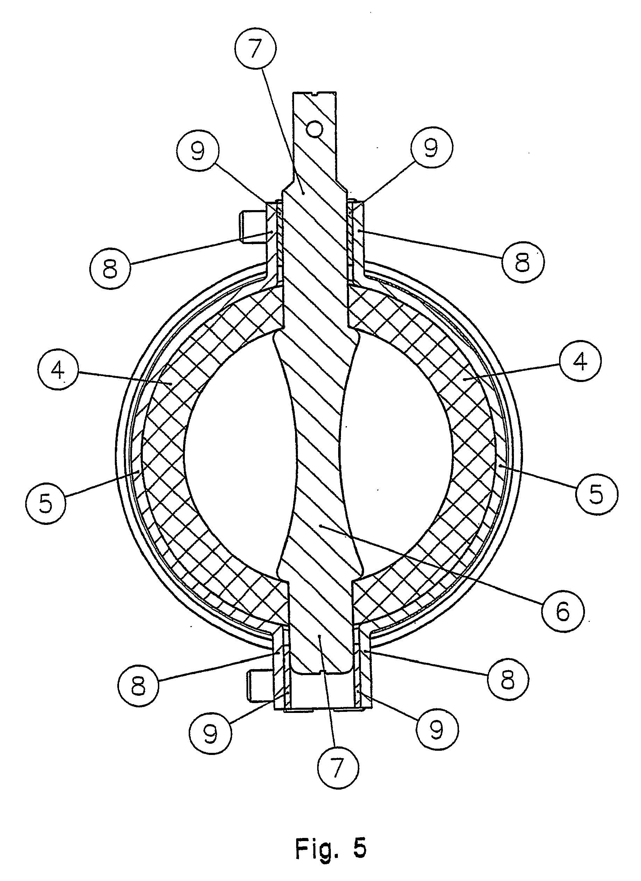

- Fig. 5:: Querschnitt entlang der Linie C - D aus Fig. 4

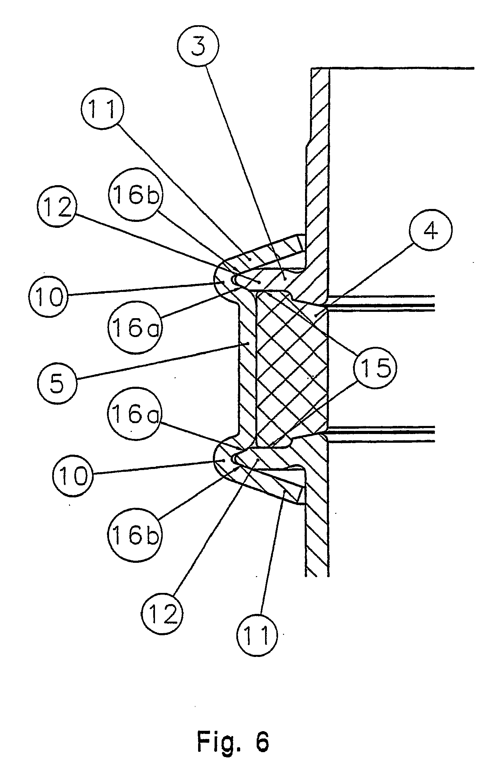

- Fig. 6:: Vergrößerung des mit E bezeichneten Ausschnittes aus Fig. 3

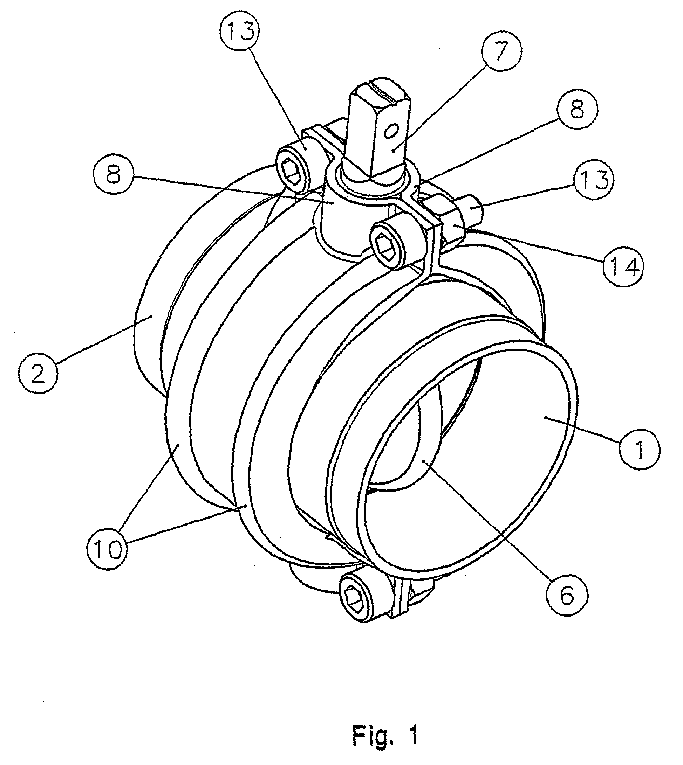

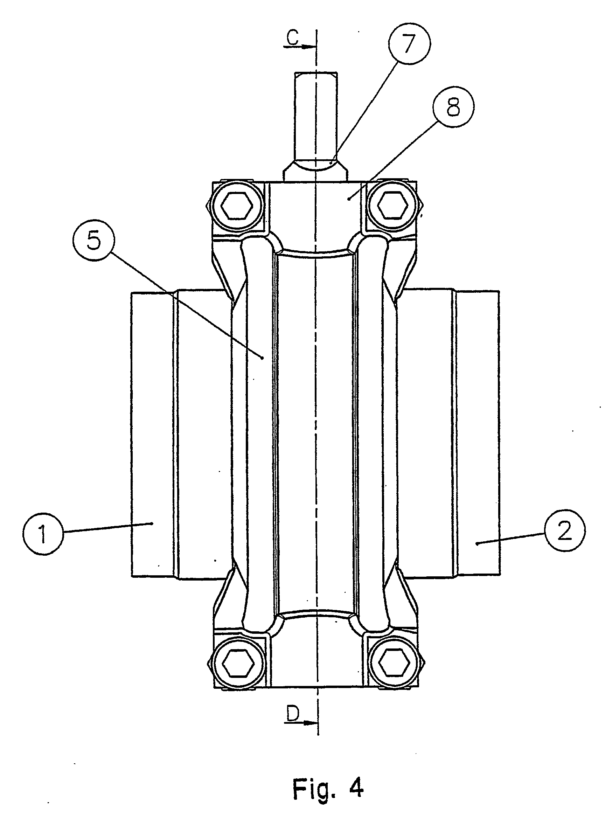

Die Fig. 1 und Fig. 4 zeigen Gesamtansichten von schräg oben bzw. von der Seite eines erfindungsgemäßen Drosselklappenventils. Wie in der Zeichnung zu erkennen, ist das Ventil aufgebaut aus einem Ventilzufluß 1 und aus einem Ventilabfluß 2. Der Ventilzufluß 1 sowie der Ventilabfluß 2 sind jeweils mit Flanschen 3 ausgestattet, deren Außenflächen 15 jeweils mit den Klemmenhälften 5 axial an die Gummidichtung 4 angepreßt sind. Die Gummidichtung 4 ist auf der Ventilscheibe 6 angebracht. Die Ventilscheibe 6 ist mit den Ventilscheibenschäften 7 in den in die ringförmigen Aufnahmen 8 der Klemmenhälften 5 eingesetzten Hülsen 9 drehbar gelagert.

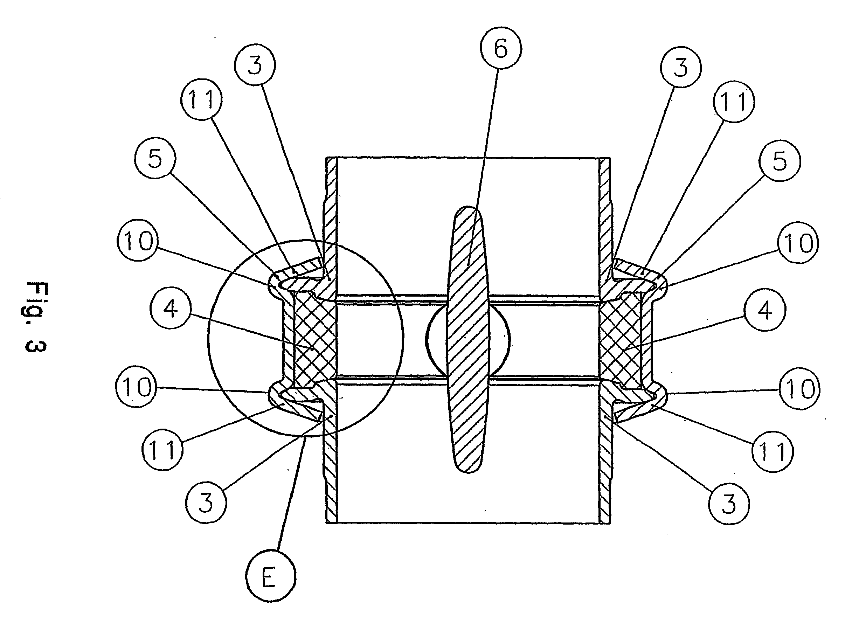

Wie in Fig. 3 und Fig. 1 zu erkennen, sind die Klemmenhälften 5 jeweils mit zwei ringförmigen, konzentrischen Vertiefungen 10 zur Aufnahme der Flansche 3 ausgebildet. Die Vertiefungen 10 sind an den Rändern 11 abgeschrägt. Die Flansche 3 weisen nach außen hin eine konische Verjüngung 12 auf. Die Flansche 3 stehen jeweils an der inneren und äußeren Berührungsflächen 16a bzw. 16b mit den Klemmenhälften 5 in starrer Verbindung.

Die Klemmenhälften 5 sind mit Schrauben 13 und Muttern 14 zu einem Ring verbunden.

Wenn axiale, von der Anlage in Richtung auf das Ventil wirkende Kräfte am Ventilzufluß 2 angreifen, werden diese Kräfte über die innere Berührungsfläche 16a des Flansches 3 mit der Klemmenhälfte 5 auf die Klemmenhälfte 5 und von dort über die innere Berührungsfläche 16a der Klemmenhälfte 5 mit dem Flansch 3 auf den Flansch 3 des Ventilabflusses 1 übertragen. Dabei wird durch die äußere Berührungsfläche 16b die den Flansch 3 an die Gummidichtung 4 pressende Kraft unverändert erzeugt.

Wenn axiale, in Richtung auf die Anlage, von dem Ventil weggerichtete Kräfte am Ventilzufluß 2 angreifen, werden diese Kräfte über die äußere Berührungsfläche 16b des Flansches 3 mit der Klemmenhälfte 5 auf die Klemmenhälfte 5 und von dort über die innere Berührungsfläche 16a der Klemmenhälfte 5 mit dem Flansch 3 wieder auf den Flansch 3 zurückübertragen. Die anpressende Kraft auf die Gummidichtung 4 bleibt dabei konstant.

Wenn axiale, von der Anlage in Richtung auf das Ventil wirkende Kräfte am Ventilabfluß 1 angreifen, werden diese Kräfte über die innere Berührungsfläche 16a des Flansches 3 mit der Klemmenhälfte 5 auf die Klemmenhälfte 5 und von dort über die innere Berührungsfläche 16a der Klemmenhälfte 5 mit dem Flansch 3 auf den Flansch 3 des Ventilzuflusses 2 übertragen. Dabei wird durch die äußere Berührungsfläche 16b die den Flansch 3 an die Gummidichtung 4 pressende Kraft unverändert erzeugt.

In beiden Fällen bleiben erfindungsgemäß auf überraschend einfache Weise die auf die Gummidichtung 4 einwirkenden axialen Kräfte unabhängig vom Betriebszustand der Anlage konstant und die Gummidichtung 4 wird mit einer ausschließlich von der Konstruktion der Klemmenhälften 5 und der Gummidichtung 4 abhängigen Kraft zusammengepreßt.

In einem Verfahren zur Montage eines Drosselklappenventils nach dem Ausführungsbeispiel wird zunächst die Gummidichtung 4 über die Ventilscheibe 6 gesteckt.

Anschließend werden die Hülsen 9 auf die Ventilscheibenschäfte 7 der Ventilscheibe 6 aufgesetzt. Mit den Hülsen 9 läßt sich eine drehbare Lagerung der Ventilscheibenschäfte 7 bei gleichzeitiger Abdichtung des Ventils erreichen.

Im darauffolgenden Schritt wird die mit der Gummidichtung 4 und den Hülsen 9 versehene Ventilscheibe 6 zwischen die Flansche 3 gebracht und nachfolgend werden die Klemmenhälften 5 um die Flansche 3 herumgelegt. Dabei werden die Vertiefungen 10 der Klemmenhälften 5 auf die Flansche 3 gelegt.

Nun werden die Ventilscheibenschäfte 7 der Ventilscheibe 6 in einer beliebigen Winkelorientierung ausgerichtet. Zweckmäßigerweise wird eine Stellung gewählt, die eine gute Zugänglichkeit des automatischen Stellantriebes oder des Handrades gewährleistet.

Mit den Schrauben 13 und Muttern 14 werden die Klemmenhälften 5 zur Anpressung der Gummidichtung 4 solange festgezogen, bis die Flansche 3 mit den Klemmenhälften 5 formschlüssig starr verbunden sind. Die Flansche 3 berühren dann an der inneren und äußeren Berührungsfläche 16a bzw. 16b die Klemmenhälften 5. Die Klemmenhälften 5 sind auf diese Weise also bis zum Anschlag festgezogen. Schließlich wird auf den Ventilscheibenschaft 7 der Ventilscheibe 6 ein Handrad oder ein automatisches Stellglied montiert.

Mit diesem Verfahren ist insbesondere vorteilhaft ein *in situ* Austausch der Gummidichtung 4 möglich.

### BEZUGSZEICHENLISTE

- 1: Ventilzufluß
- 2: Ventilabfluß
- 3: Flansch
- 4: Gummidichtung
- 5: Klemmenhälfte
- 6: Ventilscheibe
- 7: Ventilscheibenschäfte
- 8: ringförmige Aufnahmen
- 9: Hülse
- 10: Vertiefungen
- 11: Ränder
- 12: konische Verjüngung
- 13: Schraube
- 14: Mutter
- 15: Außenflächen
- 16a: innere Berührungsfläche
- 16b: äußere Berührungsfläche

## Patentansprüche

1. Drosselklappenventil mit einem im wesentlichen ringförmigen, elastischen Dichtelement (4), das eine axiale Öffnung umschließt, mit einer in der axialen Öffnung quer zur Axialrichtung drehbar angeordneten Ventilscheibe (6), mit Mitteln zur Drehung der Ventilscheibe (6) zwischen geöffneten und geschlossenen Stellungen zur Steuerung eines Fluidstromes durch die Öffnung, mit mindestens zwei das Dichtelement (4) im wesentlichen ringförmig umschließenden Ventilgehäuseteilen (5), die zwei mit einem Zufluß (1) und einem Abfluß (2) verbundene Flansche (3) umgreifen, wobei konische Anlageflächen der Flansche (3) und/oder der Ventilgehäuseteile (5) derart zusammenwirken, daß die Flansche (3) durch die Ventilgehäuseteile (5) im betriebsfertig montierten Zustand axial an das Dichtelement (4) dichtend angepreßt sind, wobei die Flansche (3) mit den Ventilgehäuseteilen (5) jeweils formschlüssig starr verbunden sind, **DADURCH GEKENNZEICHNET, daß** die Flansche (3) rotationssymmetrisch geformt sind.

2. Drosselklappenventil nach Anspruch 1, **DADURCH GEKENNZEICHNET, daß** die mit dem Dichtelement (4) in Anlage stehenden Innenflächen der Klemmenhälften (5) zwei ringförmige, die Flansche (3) umschließende Vertiefungen (10) aufweisen.

3. Drosselklappenventil nach Anspruch 2, **DADURCH GEKENNZEICHNET, daß** die Vertiefungen (10) an den Rändern (11) abgeschrägt sind.

4. Drosselklappenventil nach einem der vorhergehenden Ansprüche, **DADURCH GEKENNZEICHNET, daß** die Flansche (3) nach außen konisch verjüngt ausgebildet sind.

5. Drosselklappenregelventil nach einem der vorhergehenden Ansprüche, **DADURCH GEKENNZEICHNET, daß** die Ventilgehäuseteile als zwei Klemmenhälften (5) ausgebildet sind.

6. Drosselklappenventil nach einem der vorhergehenden Ansprüche, **DADURCH GEKENNZEICHNET, daß** die Ventilgehäuseteile (5) mit Schrauben (13) und Muttern (14) verbindbar ausgebildet sind.

7. Drosselklappenventil nach einem der vorhergehenden Ansprüche, **DADURCH GEKENNZEICHNET, daß** die Ventilgehäuseteile (5) mit zwei radial gegenüberliegenden ringförmigen Aufnahmen (8) zur Aufnahme von Ventilscheibenschäften (7) der Ventilscheibe (6) ausgebildet sind.

8. Drosselklappenventil nach einem der vorhergehenden Ansprüche, **DADURCH GEKENNZEICHNET, daß** das Mittel zur Drehung der Ventilscheibe (6) ein Handrad ist.

9. Drosselklappenventil nach einem der Ansprüche 1 bis 8, **DADURCH GEKENNZEICHNET, daß** das Mittel zur Drehung der Ventilscheibe (6) ein automatisches Stellglied ist.

10. Verfahren zur Montage eines Drosselklappenventils nach einem der vorhergehenden Ansprüche, **DADURCH GEKENNZEICHNET, daß** in einem ersten Schritt das Dichtelement (4) über die Ventilscheibe (6) gesteckt wird, daß in einem zweiten Schritt Hülsen (9) auf Ventilscheibenschäfte (7) der Ventilscheibe (6) aufgesetzt werden, daß in einem dritten Schritt die mit dem Dichtelement (4) und den Hülsen (9) versehene Ventilscheibe (6) zwischen die Flansche (3) plaziert wird, daß in einem vierten Schritt die Ventilgehäuseteile (5) um die Flansche (3) herum plaziert werden, daß in einem fünften Schritt die Ventilscheibenschäften (7) der Ventilscheibe (6) in einer gewünschten Winkelorientierung ausgerichtet werden, daß in einem sechsten Schritt die verstellbaren Mittel (13, 14) zum Anlegen zusammenziehender radialer und axialer Kräfte an das Dichtelement (4) solange verstellt werden, bis die Flansche (3) mit den Ventilgehäuseteilen (5) formschlüssig starr verbunden sind, und daß in einem letzten Schritt die Mittel zur Drehung der Ventilscheibe (6) angebracht werden.

## Claims

1. A throttle valve with an essentially annular, elastic sealing element (4) that envelops an axial opening, with a valve disk (6) rotatably arranged in the axial opening transverse to the axial direction, with means for turning the valve disk (6) between opened and closed settings for controlling a stream of fluid through the opening, with at least two valve housing parts (5) that essentially annularly envelop the sealing element (4) and envelop two flanges (3) connected with an inlet (1) and outlet (2), wherein conical abutting surfaces of the flanges (3) and/or the valve housing parts (5) interact in such a way that the flanges (3) are tightly pressed axially against the sealing element (4) by the valve housing parts (5) in an operational state, wherein the flanges (3) are positively and rigidly connected with the respective valve housing parts (5), **characterized in that** the flanges (3) is rotationally symmetrical.

2. The throttle valve according to claim 1, **characterized in that** the interior surfaces of the clamping halves (5) that abut the sealing element (4) have two annular recesses (10) that envelop the flange (3).

3. The throttle valve according to claim 2, **characterized in that** the recesses (10) are beveled at the edges (11).

4. The throttle valve according to one of the preceding claims, **characterized in that** the flanges (3) taper conically toward the outside.

5. The throttle valve according to one of the preceding claims, **characterized in that** the valve housing parts consist of two clamping halves (5).

6. The throttle valve according to one of the preceding claims, **characterized in that** the valve housing parts (5) can be connected with screws (13) and nuts (14).

7. The throttle valve according to one of the preceding claims, **characterized in that** the valve housing parts (5) are provided with two radially opposed annular receptacles (8) for holding valve disk shafts (7) of the valve disk (6).

8. The throttle valve according to one of the preceding claims, **characterized in that** the means for turning the valve disk (6) is a hand wheel.

9. The throttle valve according to one of claims 1 to 8, **characterized in that** the means for turning the valve disk (6) is an automatic actuator.

10. A method for assembling a throttle valve according to one of the preceding claims, **characterized in that** the sealing element (4) is inserted over the valve disk (6) in a first step, sheaths (9) are placed on valve disk shafts (7) of the valve disk (6) in a second step, the valve disk (6) provided with the sealing element (4) and sheathes (9) is placed between the flanges (3) in a third step, the valve housing parts (5) are placed around the flanges (3) in a fourth step, the valve disk shafts (7) of the valve disk (6) are aligned in a desired angular orientation in a fifth step, the adjustable means (13, 14) for abutting contracting radial and axial forces to the sealing element (4) are adjusted in a sixth step until the flanges (3) are positively and rigidly connected with the valve housing parts (5), and the means for turning the valve disk (6) are attached in a last step.

## Revendications

1. Vanne à papillon avec un élément d'étanchéité (4) élastique de forme sensiblement annulaire entourant une ouverture axiale, avec un papillon (6) disposé de manière tournante dans l'ouverture axiale, perpendiculairement à la direction axiale, avec des moyens pour la rotation du papillon (6) entre des positions ouverte et fermée pour le contrôle d'un flux de fluide passant par l'ouverture, avec au moins deux parties de corps de vanne (5) entourant de manière sensiblement annulaire l'élément d'étanchéité (4) et enveloppant deux brides (3) reliées avec une arrivée (1) et un départ (2), des surfaces d'appui coniques des brides (3) et/ou des parties de corps de vanne (5) coopérant de sorte que, dans l'état monté et prêt à fonctionner, les brides (3) soient pressées axialement contre l'élément d'étanchéité (4) par les parties de corps de vanne (5) en assurant l'étanchéité, les brides (3) étant chacune reliées positivement de manière rigide avec les parties de corps de vanne (5), **caractérisée en ce que** les brides (3) sont réalisées avec une symétrie de révolution.

2. Vanne à papillon selon la revendication 1, **caractérisée en ce que** les surfaces intérieures des demi-pinces (5) en appui contre l'élément d'étanchéité (4) présentent deux renfoncements annulaires (10) entourant les brides (3).

3. Vanne à papillon selon la revendication 2, **caractérisée en ce que** les renfoncements (10) présentent une pente sur les bords (11).

4. Vanne à papillon selon l'une des revendications précédentes, **caractérisée en ce que** les brides (3) sont réalisées avec une réduction en forme de cône vers l'extérieur.

5. Vanne à papillon selon l'une des revendications précédentes, **caractérisée en ce que** les parties de corps de vanne sont réalisées sous la forme de deux demi-pinces (5).

6. Vanne à papillon selon l'une des revendications précédentes, **caractérisée en ce que** les parties de corps de vanne (5) sont réalisées de façon à pouvoir être reliées au moyen de vis (13) et d'écrous (14).

7. Vanne à papillon selon l'une des revendications précédentes, **caractérisée en ce que** les parties de corps de vanne (5) sont réalisées avec deux logements (8) annulaires se faisant face radialement pour recevoir les extrémités d'axe de papillon (7) du papillon (6).

8. Vanne à papillon selon l'une des revendications précédentes, **caractérisée en ce que** le moyen de rotation du papillon (6) est une manivelle.

9. Vanne à papillon selon l'une des revendications 1 à 8, **caractérisée en ce que** le moyen de rotation du papillon (6) est un organe de réglage automatique.

10. Procédé de montage d'une vanne à papillon selon l'une des revendications précédentes, **caractérisé en ce que**, lors d'une première étape, l'élément d'étanchéité (4) est enfilé sur le papillon (6), **en ce que**, lors d'une deuxième étape, des douilles (9) sont placées sur les extrémités d'axe de papillon (7) du papillon (6), **en ce que**, lors d'une troisième étape, le papillon (6) muni de l'élément d'étanchéité (4) et des douilles (9) est placé entre les brides (3), **en ce que**, lors d'une quatrième étape, les parties de corps de vanne (5) sont placées autour des brides (3), **en ce que**, lors d'une cinquième étape, les extrémités d'axe de papillon (7) du papillon (6) sont placées dans une orientation angulaire désirée, **en ce que**, lors d'une sixième étape, les moyens réglables (13, 14) pour l'application de forces de serrage radiales et axiales sur l'élément d'étanchéité (4) sont réglés jusqu'à ce que les brides (3) soient reliées positivement et de manière rigide avec les parties de corps de vanne (5), et **en ce que**, lors d'une dernière étape, les moyens de rotation du papillon (6) sont mis en place.
